Europäisches Patentamt

European Patent Office

Office européen des brevets

(19)

(11) Publication number : **0 587 381 A1**

(12) # EUROPEAN PATENT APPLICATION

(21) Application number : **93306977.5**

(22) Date of filing : **03.09.93**

(51) Int. Cl.⁵ : **C08F 8/10,** C08F 8/28,
C08F 8/32

(30) Priority : **09.09.92 GB 9219092**
**12.12.92 GB 9225999**
**01.03.93 GB 9304084**

(43) Date of publication of application :
**16.03.94 Bulletin 94/11**

(84) Designated Contracting States :
**BE DE FR GB IT**

(71) Applicant : **BP Chemicals Limited**
**Britannic House 1 Finsbury Circus**
**London EC2M 7BA (GB)**

(72) Inventor : **Blackborow, John Richard, BP**
**Chemicals Limited**
**P.O. Box 21, Bo'ness Road**
**Grangemouth, Stirlingshire FK3 9XH (GB)**

(74) Representative : **Krishnan, Suryanarayana**
**Kalyana et al**
**BP INTERNATIONAL LIMITED Patents &**
**Agreements Division Chertsey Road**
**Sunbury-on-Thames Middlesex TW16 7LN**
**(GB)**

(54) **Novel derivatives of poly(iso)butene.**

(57) This invention relates to a substituted acylating agent derivable by reacting a polymer comprising poly(iso)butene with an enophile wherein at least 50% of the undaturated linkages in the poly(iso)butene reactant terminate in a $=CH_2$ group forming the highly reactive component (HRPIB) thereof. The number average molecular weight (Mn) of the HRPIB is at least 750 and the substitution ratio of the substituted acylating agent, which is chlorine free, is <1.3. Such agents are most useful intermediates for producing eg functionalised amino- and hydroxylated-derivatives which can be used for improving the dispersancy, detergency and VI of lubricating oils and fuels.

EP 0 587 381 A1

Jouve, 18, rue Saint-Denis, 75001 PARIS

The present invention relates to novel derivatives of poly(iso)butenes having at least 50% of their unsaturation in the terminal position.

It is well known to use poly(iso)butenes (hereafter "PIB"s) for reacting with enophiles to form substituted acylating agents; for example, when the enophile is maleic anhydride (hereafter MA"), the so called poly(iso)butenyl succinic anhydrides are formed. The reaction products of the reaction of PIB and MA are known as PIBSA's where we define the PIBSA as a mixture of poly(iso)butenyl succinic anhydride, unreacted residual PIB and some impurities including *inter alia* traces of MA, all of which remain in the PIBSA even after the normal process of filtration whether produced in the laboratory or by industrial processes. The PIBSAs in turn are converted to the corresponding functionalised derivatives such as eg the corresponding imides by reaction with an amine. Such functionalised derivatives are used for various purposes, especially in lubricating oil or fuel compositions, included as detergents, viscosity index improvers (hereafter "VII") and dispersants. Prior art publications describe the use of PIBs in general for producing these PIBSAs but not the use of specific PIBs to produce products now of interest. For instance, US-A-4234435 refers to the use of PIBSAs in which the average number of bound enophiles (specifically succinic groups) for each equivalent weight of substituting groups is at least 1.3, that is to say the average number or molar ratio of bound enophiles to polymer chains bound to them is equal to or in excess of 1.3. This ratio we now define below generically as the substitution ratio, or, in the specific case of PIBSA as the succinylation ratio. The substituting groups described in US-A-4234435 were derived from polyalkenes (exemplified as poly(iso)butenes) having a specific molecular weight range and Mn : Mw ratio.

In any case, US-A-4234435 does not disclose the use of PIBs with high terminal unsaturation, ie PIB's which terminate in a $=CH_2$ function. Conventional PIB's usually have less than 15% terminal unsaturation and most commercial products have less than 10% terminal unsaturation.

Similarly, EP-A-355895 describes the production of PIBSAs from PIBs which have at least 70% of the terminal groupings in the structure having $\alpha$-olefinic bonds, the molar ratio of succinic groups to polyolefin chains being >1.3.

Although in the present invention and in the majority of the prior art the formation of substituted acylating agents from polyalkenes and especially PIBs is exemplified mostly by reference to the reaction between the PIB and MA, the present invention is not limited to the use of MA but rather to all enophiles which lead to the formation of substituted acylating agents upon reaction with PIBs.

It has now been found that substituted acylating agents formed by reacting an enophile such as MA with PIBs having a high degree of terminal unsaturation wherein said substituted acylating agents have a substitution ratio of less than 1.3 are, in fact, better and more effective dispersant additives for lubricating oils than substituted acylating agents derived from PIBs having a low degree of terminal unsaturation but a similarly low (<1.3) substitution ratio.

For the sake of convenience and clarity PIBs with a high degree of terminal unsaturation (>50%) will hereafter be referred to as "HRPIB"s and the PIBSAs derived from HRPIBs will hereafter be referred to as "HRPIBSA"s wherein HRPIBSA is a mixture of poly(iso)butenyl succinic anhydride derived from HRPIB, unreacted HRPIB and impurities including traces of MA, all of which remain in the HRPIBSA even after normal filtration, whether produced in the laboratory or by industrial processes.

It is well known to those skilled in the art, using appropriate techniques, that by extracting polar impurities into water or other polar solvents, the acidity of poly(iso)butenyl succinic component in the PIBSA or HRPIBSA is often less than the PIBSA or HRPIBSA itself.

Accordingly, the present invention is a substituted acylating agent derived by reacting a polymer comprising PIB with an enophile, characterised in that at least 50% of the unsaturated linkages in the PIB reactant terminate in a $=CH_2$ group forming the highly reactive poly(iso)butene component (hereafter "HRPIB") thereof, the number average molecular weight (hereafter "Mn") of the HRPIB is at least 750 and the substitution ratio of the substituted acylating agent which is substantially free of chlorine is <1.3.

Substituted acylating agents according to the invention are normally (but not exclusively) formed by reacting:

(a) an enophile represented by the general formula:

$$R-CO-CH=CH-CO-R'$$

wherein R and R' are independently -OH, -O-lower alkyl, or, taken together, is a single oxygen atom, with

(b) a polymer comprising mainly or entirely of HRPIB represented by the end group structure

$$-C(CH_3)=CH_2$$

The HRPIB used is highly reactive due to the presence of the $=CH_2$ groups. A typical example of such an HRPIB is ULTPAVIS® and a process for producing this polymer is claimed and described in our published EP-A-145235. ULTRAVIS® can be produced in grades which have a terminal unsaturation (ie $=CH_2$ end group) content of over 50%, suitably above 60% and preferably above 65% eg 65-70%, and an Mn ranging from 750-5000 as measured by Vapour Pressure Osmometry (hereafter "VPO"). Such HRPIBs can be produced substantially free of chlorine by the process described in our published EP-A-145235 which is incorporated herein by reference. Thus, unlike the process described in US-A-4234435 referred to above for the formation of PIBSAs, eg with MA, no chlorine need be used in this step due to the high reactivity of HRPIBs.

The enophile (a) is suitably a cyclic anhydride, preferably maleic anhydride (MA).

The reaction can be performed by reacting at least 0.8 moles of enophile (a) per mole of HRPIB suitably under superatmospheric conditions. The reaction temperature is suitably from 180 to 240°C, preferably from 200 to 240°C. The reaction rate is usually high and the yield of the desired product is also high. Most of the unreacted enophile such as MA can be, and preferably is, recovered from the reaction mixture, and can thus be recycled, if desired. Since chlorine is not used in any of the reaction stages, the expense and difficulties associated with handling chlorine, and the consequent product separation stages or risks of corrosion etc associated therewith, are avoided.

Some amount of tar and resin are inevitably formed during the reaction. The by-products, however, do not contain any HRPIB or its derivatives and can be totally removed by washing. In fact, this washing can be used to demonstrate that the substituted acylating agents formed have a succinylation ratio of <1.3. A specific example of the washing technique used is to strip HRPIBSA (the crude reaction product of HRPIB and MA) to remove most of the unreacted maleic anhydride and then to filter it through a filter aid, eg a Celite filter bed. This step enables the removal of some insoluble tars and resins. The filter bed can be then flushed through with a hydrocarbon solvent, eg commercial heptane, in a second step to remove HRPIBSAs adhering to the filter aid and the combined filtrates from the two steps can be diluted in eg commercial heptane (HRPIBSA/heptane, ca.30-70 v/v). This diluted filtrate solution is placed in a large separating funnel together with an aqueous solvent, eg an acetone-water mixture (ca. 30/50 v/v), the ratio of the heptane solution to the acetone-water mixture being about 2:1 v/v. The contents of the separating funnel are then shaken thoroughly and then allowed to separate. Two layers are formed of which the lower, aqueous layer is run off and kept. The upper, heptane layer is rewashed with a fresh aliquot of acetone-water mixture and again separated as previously. Thereafter the heptane layer is washed twice more with pure water and then separated. n-Butanol can advantageously be added to break any emulsions formed during the separation. The combined aqueous-acetone layers can be then evaporated to a volume of about 100 ml and then extracted several times with a solvent, eg petroleum ether. The ether-washed aqueous layer can be then finally separated and evaporated to dryness and heated to 170°C. The ether fractions can also be evaporated under vacuum until all the ether solvent has been removed. The residual viscous material can be combined with the original heptane layer and the solvents from this combined ether-heptane fraction removed by evaporation. The residue left behind after this step is heated eg to 180°C under vacuum.

The residual solids from the evaporation of the aqueous layers are analysed to ensure that no poly(iso)butenyl compounds are present.

The base equivalent (mg KOH/g) of the residual solids from the organic ether-heptane layers is then measured and the succinylation ratio is calculated. For the purposes of the present invention, the molar ratio of poly(iso)butenyl bound enophiles to poly(iso)butenyl groups bound to such enophiles (the so called 'substitution ratio') is calculated from equation (1) below:

$$\frac{Mn \times base\ equivalent\ (mg\ KOH/g)}{112200\ -(98 \times base\ equivalent)} \times \frac{100}{conversion} \quad (1)$$

where the base equivalent is that of the washed PIBSA or substituted acylating agent substantially free from polar impurities and the conversion is the percentage conversion of HRPIB to the corresponding substituted acylating agent. If the ratio described by equation (1) above is calculated using the base equivalent of the unwashed PIBSAs or unwashed substituted acylating agents, an apparent substitution ratio is obtained which does not correspond to the molar ratio of poly(iso)butenyl bound enophiles to poly(iso)butenyl groups bound to the enophiles since the unwashed PIBSAs or substituted acylating agents contain acidic impurities.

The substituted acylating agents so formed and filtered, but not washed, can be further functionalised eg to the corresponding polyaminated derivative by reaction with a polyamine. A typical example of such a reaction is the reaction of HRPIB with MA to form the corresponding HRPIBSA which can then be reacted with a polyamine to form the corresponding succinimide. Succinimides so formed have a degree of detergency properties not associated with similar derivatives produced from conventional PIBs which have only about 10% terminal unsaturation or less. The imides derived from the HRPIBSAs can be used to produce very low viscosity lubricant oils thereby enabling fuel economy to be achieved.

These properties are achieved because succinimides made from substituted acylating agents derived in turn from HRPIBs, which have a high degree of terminal unsaturation, possess more dispersing power than an equal weight of a succinimide prepared from a PIBSA derived from PIBs with a low degree of terminal unsaturation even though the substitution ratio in both cases may be the same. These derivatives can be used for blending into lubricating oils, or as gasoline additives.

The present invention is further illustrated with reference to the following Examples:

In the Examples and the Comparative Tests below, the amount of terminal vinylidene group in the polymers used was measured, where applicable, as follows:

ULTRAVIS® polymer - an HRPIB - (2.8 g) was dissolved in 3 ml of $CDCl_3$ and chromium acetylacetonate added to give a 0.08 molar chromium solution. This solution was placed in a 10 mm NMR tube and the $^{13}$C NMR Spectrum of the solution was recorded in a Brucker WP 200FT spectrometer which registered between 10 and 14 thousand scans. Individual olefin carbon signals were measured by integration and the proportion atrributable to terminal vinylidene determined.

## EXAMPLE 1:

ULTPAVIS®10 poly(iso)butene (700g, Mn 949 by VPO, terminal vinylidene groups 68%, ex BP Chemicals Ltd) was placed in a two-litre autoclave with maleic anhydride (144.5 g). The autoclave was sealed and purged with nitrogen and heated to 235°C. This temperature was held for 2.5 hours, whilst stirring the contents of the autoclave and the autoclave was then cooled and the reaction products discharged. The products were stripped at 200°C under vacuum to remove most of the excess maleic anhydride. The stripped product was then filtered through a filter aid and the resulting filtrate, ie the HRPIBSA, was analysed.

The HRPIBSA had a base equivalent of 102 mg KOH/g and 70.3% of the polybutene used was converted (Ex1).

## EXAMPLE 2:

Example 1 was repeated using 217 g of maleic anhydride and maintaining the temperature at 235°C for 3.5 hours. The resultant HRPIBSA had a base equivalent of 153mg KOH/g (Ex 2).

## EXAMPLE 3:

The HRPIBSA (226 g) from Example 2 was dissolved in heptane (600 ml) and placed in a separating funnel with a water/acetone mixture (ca. 300 ml, 60/40 v/v respectively). The whole was then mixed thoroughly and then allowed to separate into organic and aqueous layers which were then collected separately.

The organic layer was rewashed with a water/acetone mixture and the layers again separated and collected. Finally the organic layer was washed twice with water. n-Butanol was added to break any emulsions formed by the washing.

All the aqueous washings were collected and evaporated to a residue of ca. 5% bulk. The residue was then extracted several times with petroleum ether and the ether layers were combined with the organic layer and the whole evaporated under vacuum to remove any solvents present at 180-190°C.

The resultant viscous, washed HRPIBSA so produced was combined with two other samples prepared in a similar manner. The base equivalent of this washed HRPIBSA was 86.4 mg KOH/g (Ex 3).

The residue from the aqueous layer after extraction with petroleum ether was analysed and found to contain no poly(iso)butene or poly(iso)butenyl derivatives.

Comparative Test 1 (not according to the invention);

HYVIS®10 poly(iso)butene (600g, Mn = 950, terminal vinylidene groups <10%, ex BP Chemicals Ltd) was placed in a two-litre autoclave together with maleic anhydride 186 g). The autoclave was sealed and purged with nitrogen and heated to 235°C. This temperature was held for 3.5 hours whilst the contents of the autoclave were stirred. Thereafter, the autoclave was cooled and the viscous product therein discharged. The viscous product was stripped of most of the unreacted maleic anhydride under vacuum. The stripped product was then filtered using a filter aid and the filtrate analysed.

The PIBSA so produced had a base equivalent of 105 mg KOH/g and 72% of poly(iso)butene was converted (CT 1).

## EXAMPLE 4:

The HRPIBSAs obtained from Examples 1,2 and 3 and the Comparative Test 1 (Ex 1, Ex 2, Ex 3 and CT 1 respectively) were each reacted with a half molar equivalent of triethylene tetramine at 175° C for 3.5 hours to form four different bis-succinimides U1, U2, U3 and CT1A respectively from the corresponding Examples and Test.

The viscosity indices (VI's) of each of these bis-imides (10% w/w) was measured (according to the method in ASTM D2270-86) in solvent neutral (SN) 150 oil and total and basic nitrogen values of these bis-imides are shown in Table 1 below:

**TABLE 1**

| Property | U1 | U2 | U3 | CT1A |
|---|---|---|---|---|
| VI | 118 | 119 | 118 | 114 |
| Total N% | 2.4 | 3.03 | 1.88 | 2.22 |
| Basic N% | 1.12 | 1.46 | 0.60 | 0.96 |

Samples of U1, U2 and CT1A were separately made up in oil to a standard basic nitrogen level (0.6% w/w) and their dispersancies compared in a thin layer chromatography test. The dispersancy of each sample was equivalent within experimental error. However, far less amount of U2 was required than CT1A to achieve the same dispersancy.

**EXAMPLE 5:**

A sample of CT1A and U2 were separately made up in SN 500 oil to 5%w/w solutions and their viscosities measured at 40°C and 100°C. 1% carbon black was introduced to these mixtures which were then thoroughly mixed together. The viscosities were then measured at 40° C and 100°C as previously. The % increase in viscosity in the presence of carbon black is shown in Table 2 below:

**TABLE 2**

| Sample | 40°C | 100°C |
|---|---|---|
| U2 | 0.6 | -0.8 |
| CT1A | 8.0 | 11.5 |

Since it is well known that the most dispersed sample will yield the least increase in viscosity, the above shows that U2 gives the least increase and is hence the most dispersed sample.

**EXAMPLE 6:**

The process of Example 1 was repeated using ULTRAVIS® 70 poly(iso)butene (200 g, Mn = 1960 by VPO, terminal unsaturation 63%, viscosity 1409 cSt at 100°C) using a 600 ml autoclave and maleic anhydride (50 g). The contents of the autoclave were heated at 235°C for 4 hours, the reaction products cooled, discharged and stripped of excess maleic anhydride as previously. The stripped product was then dissolved in heptane (600 ml) and a Celite filter aid (30 g) added and the whole stirred for 15 minutes. This mixture was then filtered through a bed of filter aid in a No. 4 porosity sintered flask, and the filtrate was then collected and the solvent evaporated therefrom to leave an HRPIBSA which was analysed.

The poly(iso)butene conversion was 71.5% and the base equivalent was 58.61 mg KOH/g. The apparent succinylation ratio of the HRPIBSA (as defined in equation (1) above) was over 1.4.

A portion of this HRPIBSA was washed by the procedure described in Example 3 above to remove any material not containing poly(iso)butene or its derivatives. The base equivalent of the washed HRPIBSA was then measured and found to be 42.2 mg KOH/g indicating a real succinylation ratio for the HRPIBSA of less than 1.1.

**EXAMPLES 7-11:**

A series of Examples (7-11) using various ULTRAVIS® poly(iso)butenes and Comparative Tests (2-5) using HYVIS® poly(iso)butenes were performed as described in Example 1 and Comparative Test 1 respectively and the filtered PIBSAs and HRPIBSAs analysed in each case for their apparent succinylation ratios. Portions of these PIBSAs and HRPIBSAs were then very carefully washed as described in Example 3 above to remove material not containing poly(iso)butene or its derivatives. The real succinylation ratios were then calculated from the base equivalent of the washed PIBSAs and HRPIBSAs. The maleinisation conditions are described in Table 3A and the results of these experiments are summarised in Table 3B below:

**TABLE 3A**

| EX No. | PIB (200g) | MA(g) | Time (Hrs) | Temp (°C) | Filter Bed |
|---|---|---|---|---|---|
| 7 | ULTRAVIS 10 | 50 | 20 | 201 | Celite |
| 8 | ULTRAVIS 30 | 50 | 4 | 235 | Celite |
| 9 | ULTRAVIS 30 | 50 | 4 | 235 | Celite |
| 10 | ULTRAVIS 70 | 40 | 5 | 230 | Celite |
| 11 | ULTRAVIS 70 | 40 | 5 | 230 | Celite |
| CT2* | HYVIS 120 | 27.1 | 6 | 235 | Heptane/Celite |
| CT3* | HYVIS 120 | 27.1 | 6 | 235 | Heptane/Celite |
| CT4 | HYVIS 150 | 28 | 6 | 235 | Celite |
| CT5 | HYVIS 150 | 28 | 6 | 235 | Celite |

* Sample dissolved in hexane for ease of filtration.

CT - Comparative Test not according to the invention.

**TABLE 3B**

| Ex No. | Term Unsatn in PIB (%) | Mn by VPO | SUCCINYLATION RATIO | |
|---|---|---|---|---|
| | | | APPARENT After Filtration | REAL After Washing |
| 7 | 68 | 949 | 1.8 | 1.0 |
| 8 | 65 | 1209 | 1.98 | 1.06 |
| 9 | 65 | 1209 | 1.67 | 1.16 |
| 10 | 63 | 1960 | 1.48 | 1.07 |
| 11 | 63 | 1960 | 1.24 | 1.07 |
| CT2 | <10 | 2170 | 1.03 | - |
| CT3 | <10 | 2170 | 1.04 | - |
| CT4 | <10 | 2045 | 0.94 | - |
| CT5 | <10 | 2045 | 1.04 | - |

CT - Comparative Test not according to the invention.

Amongst the data tabulated in Tables 3A and 3B above, it is worth noting for instance that in:

EXAMPLE 7, the base equivalent of the HRPIBSA so formed was 152 mg KOH/g. This HRPIBSA was then washed as described in Example 3 above to remove non-poly(iso)butene or non-poly(iso)butenyl material and the base equivalent of the resulting washed HRPIBSA was found to be 93.8. The real succinylation ratio of the HRPIBSA was calculated according to Equation 1 above and found to be 1.0; and

EXAMPLE 10, the HRPIB conversion upon reaction with MA was 72% and the base equivalent mg KOH/g was 58. The real succinylation ratio determined by washing was 1.07.

### EXAMPLE 12:

HRPIBSA (193.9g) from Example 10, filtered but not washed was reacted with 7.46 mls of triethylene tetramine at 175°C for 3.5 hours under nitrogen. By-product water was removed by sweeping the reactor with nitrogen. A bis-succinimide (U4) was thus obtained.

200g of a HYVIS® poly(iso)butene (Mn 2045) was reacted with MA (28 g) for six hours at 235°C in an autoclave. The products from the autoclave were discharged and filtered through a filter aid. The filtrate was collected and 52.1 g of this filtrate was reacted with triethylene tetramine (2.05 mls) at 175°C for 3.5 hours under nitrogen. By-product water was removed by sweeping the reactor with nitrogen. A bis-succinimide (CT5A) was thus obtained.

The bis-imides U4 and CT5A were made up in SN 150 oil to 9% w/w and the viscosity (cSt) at 40°C and 100°C was measured in each case together with the viscosity index (VI). These results are tabulated in Table 4 below:

#### TABLE 4

| SAMPLE TESTED | VISCOSITY (cSt) AT | | VI |
|---|---|---|---|
| | 40°C | 100°C | |
| SN 150 | 19.93 | 3.98 | 92.7 |
| U4/SN 150 | 44.51 | 7.33 | 128 |
| CT5A/SN 150 | 45.43 | 7.39 | 126 |

From the above it can be seen that there is no significant difference between the VI's of the PIBSAs or HRPIBSAs derived from HYVIS® or ULTPAVIS® samples.

The above Examples and comparative tests show that all PIBSAs and HRPIBSAs made by thermally reacting the respective poly(iso)butenes with MA gave a succinylation ratio close to unity (as is demonstrated by washing) irrespective of the molecular weight of the starting poly(iso)butene.

### EXAMPLE 13:

Two of the bis-succinimides prepared in Example 12 above (U4 - according to the invention, and CT5A - not according to the invention) were tested for dispersancy performance. The following method was used:

Used Engine oil (0.3 g) was used as the standard and the dispersants U4 and CT5A (0.3 g each) were added to this standard engine oil in separate experiments. The used engine oil was added to the succinimide sample to provide a source of dispersible soot-like debris. The mixture of the engine oil and the dispersant were dissolved in chloroform (3ml). Three spots of 5 microlitres of this sample solution were then applied to silica thin layer chromatography (TLC) plates. The plates were developed in heptane to a solvent distance of 150 mm.

Three criteria were used to assess the dispersancy performance. These criteria were based on the standard PETTER AVB1P cylinder engine tests (which are used to determine the piston cleaning efficiency) and were as follows:

Three measurements were made on the developed plate.

a) The longest distance from the spot origin where fluorescence at 365nm is observed. (This distance represents how far the succinimide has moved up the plate; the further the succinimide moves, the better is its performance as a dispersant).

b) The streak length of masked fluorescence. (The succinimide carries the used oil and debris up the plate and the debris quenches or masks the fluorescence of the succinimide. The longer the streak length of masked fluorescence, the better will be the dispersancy of the succinimide).

c) The percentage of dispersed material moved from the spot origin on the TLC plate. (The dispersed debris strongly absorbs light. Thus, by moving a light densitometer up the total length of the streak measured in (b) above, a record of absorbance as a function of distance moved can be obtained in the form of a chromatogram. By integrating the area defined between the base line and the chromatographic trace, the amount of debris can be related to its position on the TLC plate. The percentage of the debris moved from its spot origin was thus calculated).

Thus values of two distances and a percentage were obtained. By comparing these values with real engine test data, pass marks for these three criteria have been estimated as a = 60mm; b = 60mm; and c = 70%. On this basis the samples tested performed as follows:

**TABLE 5**

| Sample | a(mm) | b(mm) | c(%) |
|--------|-------|-------|------|
| U4 | 80.8 | 74.7 | 94.2 |
| CT5A | 67.7 | 62.8 | 91.9 |
| Pass Marks | 60 | 60 | 70 |

The above results show that bis succinimide prepared from ULTRAVIS® *via* the corresponding HRPIBSA performed better as a dispersant than those derived from polybutenes with a low degree of terminal unsaturation *via* the corresponding PIBSA. Significantly, both have high viscosity index credits in oil solutions and yet these results have been achieved, contrary to conventional teaching in this art, using low succinylation ratios.

**EXAMPLE 14:**

278 Kg of ULTRAVIS® 30 polybutene (Mn = 1375, by VPO) were placed in a 600 litre stirred reactor for 12 hours at 100°C. At a zero time, vacuum and heat were applied to the reactor. At time 2 hours, the reactor had reached 165°C and the vacuum was broken and the reactor pressurised with nitrogen gas at 15 psig. At time 2.17 hours, the reactor had reached 175°C and the introduction of maleic anhydride was commenced; 86 Kg of maleic anhydride was added in aliquots over two hours. At time 3.45 hours the reactor was at 232° C. At time 4.17 hours, when all the maleic anhydride had been added, the reactor pressure was increased to 35 psig with nitrogen. at time 7.15 hours, the reactor pressure was released and vacuum applied for three hours to remove unreacted maleic anhydride. At time 10.15 hours, the vacuum was broken again and the reactor was brought to atmospheric pressure with nitrogen gas. The contents of the reactor were then dropped into a holding vessel. 200g of the product from the holding vessel were filtered through a bed of Celite filter aid and the base equivalent of the filtrate was measured as 92.17 mg KOH/g.

104.63g of the filtrate were washed carefully as described in Example 3 above. A washed HRPIBSA weighing 102.21g and having a base equivalent of 67.84mg KOH/g was obtained. The aqueous washings from this separation were evaporated to dryness under vacuum and weighed 2.12g and had a base equivalent of 919.67mg KOH/g. The real succinylation ratio of the washed HRPIBSA was 1.0 and the conversion to succinate was measured as 86.6%.

**EXAMPLE 15:**

200g of an ULTRAVIS® 70 polybutene (Mn = 1960, by VPO) was placed in a 60 ml autoclave with 39.97g of maleic anhydride. The autoclave was purged with nitrogen and sealed and heated to 235°C with stirring; after six hours, the stirring was stopped and the autoclave was cooled and discharged. The contents were placed in a rotary evaporator. The evaporator was heated to 200°C under vacuum (<1 mm Hg)to strip the contents of unreacted anhydride and the stripping step lasted two hours. The crude HRPIBSA so produced was then filtered through a bed of Celite filter aid; the apparent succinylation ratio of the filtrate was 1.4.

100.93g of the filtrate were washed carefully as described in Example 3 above; a washed HRPIBSA weighing 98.4g was recovered. The aqueous washings were evaporated to dryness under reduced pressure and weighed 0.85g. The washed HRPIBSA had a base equivalent of 41.5mg KOH/g and a conversion of 74.18%. The real succinylation ratio was 1.01.

The autoclave experiment described was repeated using exactly the same quantities and conditions. A crude stripped HRPIBSA was made and analysed without filtration; it had a base equivalent of 116.5mg KOH/g. 175.63g of this material were washed carefully as described in Example 3 above; 164.05g of a washed HRPIBSA of base equivalent 45mg KOH/g was obtained. The aqueous washings were evaporated to dryness under reduced pressure and gave a weight of 11.46g and a base equivalent of 1129mg KOH/g.

Table 6 below shows the mass (g) and base equivalence (mg KOH/g) balance of the crude unfiltered HRPIBSA and its components.

## TABLE 6

| Component | Mass | Base Equivt | Total Acidity* |
|---|---|---|---|
| Crude unfiltered HRPIBSA | 175.63 | 116.6 | 20460.9 |
| Washed HRPIBSA | 164.05 | 45 | 7382.2 |
| Aq. Washings (dried) | 11.46 | 1129 | 12938.3 |

\* Total Acidity = Mass x Base equivalent.

It can be seen that there was less than 0.1% weight difference and less than 0.7% total acidity difference between the crude unfiltered HRPIBSA and the combination of the other two components.

The real succinylation ratio of the washed HRPIBSA was 1.11; the conversion to succinate was 73.64%.

## Claims

1. A substituted acylating agent derivable by reacting a polymer comprising poly(iso)butene with an enophile, characterised in that at least 50% of the unsaturated linkages in the poly(iso)butene reactant terminate in a $=CH_2$ group forming the highly reactive poly(iso)butene component (HRPIB) thereof, the number average molecular weight (Mn) of the HRPIB being at least 750 and the substitution ratio of the substituted acylating agent which is chlorine free being <1.3.

2. A substituting acylating agent according to Claim 1 wherein the
   (a) enophile reactant is represented by the formula
   $$R-CO-CH=CH-CO-R'$$
   wherein R and R' are independently -OH, -O-loweralkyl,or, taken together, is a single oxygen atom, and
   (b) poly(iso)butene reactant comprising mainly or entirely of HRPIB has an end-group structure
   $$C(CH_3)=CH_2$$

3. A substituted acylating agent according to Claim 1 wherein the enophile reactant is maleic anhydride and the the PIB reactant is a HRPIB which has a molecular weight (Mn) ranging from 750-5000, the resultant acylating agent being a highly reactive poly(iso)butenyl succinic anhydride (HRPIBSA).

4. A process for producing a substituted acylating agent according to anyone of the preceding Claims wherein the enophile is reacted with the PIB at a temperature from 180-240°C,

5. A process for producing a substituted acylating agent according to Claim 4 wherein the enophile is maleic anhydride and the PIB is HRPIB, the enophile being present in an amount of at least 0.8 moles per mole of the HRPIB.

6. A process for producing an imide from a substituted acylating agent according to any one of the preceding Claims, said process comprising reacting the substituted acylating agent with a polyamine.

7. A process according to Claim 6 wherein the imide formed is a succinimide.

8. An imide of a substituted acylating agent produced by a process according to Claim 7 or 8 whenever used as an additive for a lubricating oil or gasoline.

9

European Patent
Office

**EUROPEAN SEARCH REPORT**

Application Number

EP 93 30 6977

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 457 599 (ETHYL PETROLEUM ADDITIVES, INC.)<br>* page 4, line 10 - line 13 *<br>* page 15, line 54 - page 16, line 11; claims 1-14 *<br>--- | 1-8 | C08F8/10<br>C08F8/28<br>C08F8/32<br>C08F8/46 |
| P,X | EP-A-0 545 653 (ETHYL PETROLEUM ADDITIVES)<br>* the whole document *<br>--- | 1-8 | |
| A | GB-A-2 081 274 (OROBIS LIMITED)<br>* page 1 *<br>* page 2, line 21 - line 29; claims 1-10 *<br>----- | 1 | |
| | | | **TECHNICAL FIELDS SEARCHED (Int.Cl.5)**<br><br>C08F |

The present search report has been drawn up for all claims

| Place of search | Date of completion of the search | Examiner |
|---|---|---|
| THE HAGUE | 29 December 1993 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)